Europäisches Patentamt

European Patent Office

Office européen des brevets

(19)

(11) Veröffentlichungsnummer: **0 268 779 B1**

(12) **EUROPÄISCHE PATENTSCHRIFT**

(45) Veröffentlichungstag der Patentschrift: 06.03.91

(51) Int. Cl.⁵: **C09D 11/16, C09D 11/00**

(21) Anmeldenummer: 87114106.5

(22) Anmeldetag: 26.09.87

Die Akte enthält technische Angaben, die nach
dem Eingang der Anmeldung eingereicht wurden
und die nicht in dieser Patentschrift enthalten sind.

(54) **Wässrige Schreibflüssigkeiten sowie ein Verfahren zu deren Herstellung.**

(30) Priorität: 29.10.86 DE 3636726

(43) Veröffentlichungstag der Anmeldung:
01.06.88 Patentblatt 88/22

(45) Bekanntmachung des Hinweises auf die
Patenterteilung:
06.03.91 Patentblatt 91/10

(84) Benannte Vertragsstaaten:
AT BE CH DE ES FR GB GR IT LI LU NL SE

(56) Entgegenhaltungen:

CHEMICAL ABSTRACTS, Band 82, Nr. 12, 24.
März 1975, Seite 91, Zusammenfassung Nr.
74644c, Columbus, Ohio, US

(73) Patentinhaber: Pelikan Aktiengesellschaft
Podbielskistrasse 141 Postfach 103
W-3000 Hannover 1(DE)

(72) Erfinder: Pietsch, Günter
Burgwedeler Strasse 150
W-3004 Isernhagen HB(DE)

(74) Vertreter: Volker, Peter, Dr. et al
Pelikan Aktiengesellschaft Podbielskistrasse
141 Postfach 103
W-3000 Hannover 1(DE)

## Beschreibung

Die Erfindung betrifft eine wäßrige Schreib-, Markier- und Zeichenflüssigkeit, bestehend aus Wasser, Farbmitteln, Dispersionsstabilisatoren und gegebenenfalls Bindemitteln, Netzmitteln, optischen Aufhellern, Lösungsmitteln und weiteren Additiven sowie ein Verfahren zu deren Herstellung.

Schreibflüssigkeiten, so Tuschen und Tinten, die Gelatine-Abbauprodukte als Dispersionsstabilisatoren enthalten, sind bekannt, so beispielsweise aus Chem. Abstr. 1984, Vol. 101, No. 22 (193881y) und Chem. Abstr. 1985, Vol. 102, No. 8 (63782b). Zur Herstellung der Tusche wird beispielsweise hierbei eine säurehydrolytisch abgebaute Gelatineleimlösung herangezogen. Um diese Leimlösung herzustellen, wird ein im Handel erhältliches Gelatineerzeugnis in wäßriger Lösung bei erhöhter Temperatur mit konzentrierter Schwefelsäure behandelt. Nach Abschluß der sauren Hydrolyse der Gelatine muß die Säure entfernt werden, was durch sukzessive Zugabe von festem Bariumhydroxid erfolgt, wobei Bariumsulfat ausgefällt wird. Das Bariumsulfat wird über Filterpressen aus der anfallenden Lösung entfernt. Das Filtrat in Form einer niedrigviskosen Leimlösung muß unter erheblichem Energieaufwand eingedickt werden, um die Wirksubstanz im Hinblick auf die Weiterverarbeitung in der Tusche- bzw. Tintenfabrikation aufzukonzentrieren.

Das oben beschriebene Verfahren zeigt vielfältige Nachteile. So ist die Ausgangslösung vergleichsweise verdünnt bzw. niedrigviskos einzustellen, da die Schwefelsäure andernfalls nicht leicht in dem wünschenswerten Verteilungsgrad eingearbeitet werden kann. Bei höherviskosen Lösungen führt die Einverleibung von Schwefelsäure zu Schädigungen des Gelatinemoleküls, die sich auf die angestrebten Eigenschaften der Schreibflüssigkeit nachteilig auswirken. Das Hantieren mit Schwefelsäure, insbesondere konzentrierter Schwefelsäure, erfordert zusätzliche Schutzmaßnahmen. Der Einsatz von Bariumhydroxid ist toxikologisch bedenklich.

Das anfallende Bariumsulfat muß möglichst quantitativ entfernt werden, was aufwendig ist, damit keine toxikologischen Mengen an diesen Erzeugnissen in der späteren Schreibflüssigkeit auftreten. Die Entsorgung vom Bariumsulfat, das mit anhaftenden Gelatineabbauprodukten verunreinigt ist, kann teuer und problemreich sein.

Um filtrierbare Kristallisate des ausgefällten Bariumsulfats zu erhalten, bedarf es gezielter Verfahrenssteuerungen. Dabei ist es insbesondere erforderlich, daß die Kristallisationsvorgänge langzeitig ablaufen, um die gewünschte Kristallgröße zu erhalten. Daher erfolgt die Bariumhydroxidzugabe ungewöhnlich langsam. Zusätzliche Probleme entstehen durch die Entsorgung des Bariumsulfats, das wegen seiner Giftigkeit auf Sonderdeponien gelagert werden muß. Darüber hinaus besteht nicht nur die Notwendigkeit, die Schwefelsäure stöchiometrisch auszufällen, sondern auch einen Überschuß an Bariumhydroxid zu vermeiden, da dieses ebenfalls toxikologisch bedenklich ist.

Der Erfindung lag daher die Aufgabe zugrunde, eine wäßrige Schreibflüssigkeit ausgenommen Flüssigkeiten für druckempfindliche Durchschreibpapiere auf Mikrokapsel - Basis vorzuschlagen, bei deren Herstellung die beim Stand der Technik in Erscheinung tretenden Nachteile vermieden werden.

Die Erfindung löst diese Aufgabe dadurch, daß sie als Dispersionsstabilisator kolloidal gelöste Abbauprodukte von Gelatine enthält, wobei diese Abbauprodukte durch Enzymeinwirkung entstanden sind.

Der erfindungsgemäßen wäßrigen Schreibflüssigkeit können beliebige färbende Substanzen einverleibt werden, d.h. Farbpigmente und lösliche Farbstoffe. Der Erfindungsgedanke tritt dann besonders gut in Erscheinung, wenn die wäßrige Schreibflüssigkeit Farbpigmente enthält und somit eine Tusche darstellt.

In Einzelfällen kann es von Vorteil sein, zusätzlich zu den als Dispersionsstabilisator wirkenden Gelatineabbauprodukten weitere Dispersionsstabilisatoren oder Bindemittel hinzuzugeben, wie beispielsweise Kasein oder niedrigmolekulare Acrylate.

Das erfindungsgemäße Verfahren ist dadurch gekennzeichnet, daß eine wäßrige Gelatinelösung mit abbauenden Enzymen versetzt wird, die Gelatineteilchen unter Erwärmen enzymatisch in Spaltprodukte zerlegt werden, der Enzymabbau inhibiert wird, bevor Spaltprodukte entstehen, die keine Dispersionsstabilisierung in wäßrigen Medien mehr zeigen, und zu der erhaltenen und zweckmäßigerweise abgekühlten Lösung die für eine Schreibflüssigkeit erforderlichen färbenden Substanzen sowie gegebenenfalls weitere Additive gegeben werden, so z. B. Bindemittel, andere Dispersionsstabilisatoren, Netzmittel, optische Aufheller und Lösungsmittel.

Das Wesen der Erfindung besteht darin, daß die in Lösung gebrachten Gelatineteilchen durch geeignete Enzyme enzymatisch abgebaut werden und dieser Abbau dann gestoppt wird, wenn die Teilchengröße gerade noch für die Dispersionsstabilisierung in der späteren Schreibflüssigkeit ausreicht. Das bedeutet, daß der Abbau nicht soweit gehen darf, daß letztlich nur noch die Aminosäuren in der Abbaulösung in Erscheinung treten. Den geeigneten Zeitpunkt für die Inhibierung des Enzymabbaus der Gelatineteilchen zu ermitteln, ist für den Fachmann ohne weiteres möglich und bedarf lediglich einiger Handversuche. Es muß in jedem Falle gewährleistet werden, daß noch eine kolloidale Lösung vorliegt. Zur Bestimmung dieser kolloidalen Lösung stehen dem Fachmann geeignete Methoden zur Verfügung, die beispielsweise auf dem sogenannten Tyndall-Effekt oder auf der Viskositätsbestimmung beruhen, da durch den Abbau der Gelatine die Viskosität absinkt. Somit kann mit einfachen Versuchen grundsätzlich ermittelt werden, bei welchem Viskositätswert die Enzyminhibierung einsetzen muß.

Bezüglich der Gelatine-Ausgangsmaterialien unterliegt die vorliegende Erfindung keinerlei Beschränkungen. Diese Ausgangsmaterialien können beliebiger Herkunft sein, so insbesondere zurückgehen auf Knochen- oder Hautgelatine von verschiedenen Schlachttierarten.

Da die erfindungsgemäße kolloidale Gelatineabbaulösung in gefärbten Schreibflüssigkeiten zum Einsatz kommt, ist die Färbung des Ausgangsproduktes von geringer Bedeutung. Für den gewünschten Einsatzzweck haben sich sogenannte Hautleime, also aus Tierhäuten gewonnene Ausgangsgelatinen, als besonders gut geeignet erwiesen. Diese Hautleime können durch folgende Daten näher charakterisiert werden: pH-Wert 6,5 bis 7,3, Aschegehalte 1,3 bis 2,3 %, Wassergehalt 10 bis 15 %, Säuregehalt 0,05 bis 0,14 % und Fettgehalt 0,40 bis 1,3 %. Der Fettgehalt sollte 1,5 % nicht überschreiten, da er sonst als Verunreinigung später zu Störungen führen kann. Diese Leimerzeugnisse sind handelsüblich. Das gleiche gilt für die zu deren Abbau geeigneten Enzyme. Als Beispiele seien hier genannt: Enzylase K 40 von Diamalt AG, Enzym P 300 von Henkel & Cie. GmbH oder Alcalase T von Novo Industrie GmbH.

Die Erfindung unterliegt im Hinblick auf die Mengen von Enzym und Gelatine in der Ausgangslösung keiner wesentlichen Beschränkung. Als Richtlinie könnte angegeben werden, daß unter praktischen und wirtschaftlichen Gesichtspunkten die Gelatineausgangslösung vorzugsweise zwischen etwa 10 und 50 Gew.-% Gelatine enthalten sollte. In der Praxis hat sich der Bereich von etwa 30 bis 45 Gew.-%, insbesondere von etwa 35 bis 40 Gew.-% und ganz besonders bevorzugt der Wert von etwa 40 Gew.-% als nützlich erwiesen. Es ist vorteilhaft, die Enzymmenge der gewählten Gelatinekonzentration anzupassen. Bei größerer Gelatinemenge ist eine erhöhte Enzymmenge nötig, sofern man nicht längere Abbauzeiten in Kauf nehmen will.

Die Abbauzeiten liegen in der Regel bei einer Abbautemperatur von etwa 40 bis 70 °C (vorzugsweise etwa 55 bis 60 °C) bei etwa 30 Minuten bis 3 Stunden. Hierbei spielt auch die Art und die Konzentration des gewählten Enzyms eine Rolle.

Als Enzyme zum Abbau von Gelatineeiweiß kommen grundsätzlich nur Proteasen, die die Peptidbindungen von Eiweißstoffen und Oligopeptiden zu lösen vermögen, in Betracht. Die für den erfindungsgemäßen Zweck einsetzbaren, in Handel erhältlichen Enzymprodukte sind häufig keine reinen Einkomponentensysteme, sondern können aus verschiedenen Enzymen bestehen, die ihrerseits wiederum nur spezifische Peptidgruppierungen als Substrat anzunehmen vermögen.

Z. B. besteht das Enzym P 300 aus einem Gemisch von mehreren Peptidasen, wobei sowohl sogenannte Endo- als auch Exopeptidasen, die sich im Substratangriff voneinander unterscheiden, vorhanden sind. Ein Vorteil des erfindungsgemäßen Verwendungszweckes von enzymatisch abgebauten Proteinen ist darin zu sehen, daß im Vergleich zu nichtenzymatisch hydrolysierten Proteinen die Hydrolyse selten bis zu den monomeren Aminosäurebausteinen fortschreitet. Letztere sind im Hinblick auf eine dispersionsstabilisierende Eigenschaft jedoch weitgehend wirkungslos.

Der proteolytische Abbau der Gelatine unter Verwendung der im Handel erhältlichen Enzylase K 40 (von Diamalt AG) erfolgt beispielsweise bei einem pH-Wert von 7 bis 7,5. Dieser Wert stellt sich automatisch beim Lösen der Gelatine in Wasser ein. Wählt man eine Konzentration von 0,1 Gew.-% Enzylase K 40 in einer etwa 42 gew.-%igen Gelatinelösung in gewöhnlichem Leitungswasser mittlerer Härte bei etwa 60 °C, dann ist nach einer Inkubationszeit von etwa 30 bis 60 Minuten der proteolytische Abbau weit genug fortgeschritten. Man erhält kolloidale Lösungen, die zu guter Filmbildung und hervorragender Dispersionsstabilisierung der beschriebenen Markier- bzw. Schreibflüssigkeiten befähigt sind.

Die Proteolyse-Reaktionszeit ist nicht nur abhängig von der Menge des abzubauenden Gelatinesubstrates, den Milienbedingungen, wie pH-Wert, Wasserhärte, Temperatur, Schwermetallionenkonzentration usw., sondern zu einem entscheidenden Maße von der Aktivität des speziellen Enzyms. So weist verwendete Enzylase K 40 eine Aktivität von 250.000 LVE/g (Löhlein-Volhardt-Einheiten pro Gramm) auf. Nach Herstellerangaben war die Protease P 300 durch eine Aktivität von 614.000 PE/g (Protease-Einheiten pro Gramm) gekennzeichnet. In der Fachliteratur sind ausführliche Vorschriften zur Bestimmung von Enzymaktivitäten beschrieben worden, so daß an dieser Stelle nicht näher darauf eingegangen werden muß.

Als allgemeingültige Aussage kann davon ausgegangen werden, daß sich z. B. bei Verdoppelung des Aktivitätszahlenwertes einer Aktivitätsdefinition auch die Aktivität verdoppelt, d. h., daß die Reaktionsgeschwindigkeit halbiert wird. Dem Fachmann ist es durch einfache Versuche möglich, die gewünschte und bestgeeignete Enzymkonzentration im Zusammenspiel mit den oben beschriebenen Reaktionsbedingungen auszuwählen.

Je nach Wunsch kann und sollte in der Praxis die Proteolyse in einem definierten Verfahrensstadium inhibiert werden. Hierzu eignet sich nicht nur die oben bereits angesprochene Hitzeinhibierung, sondern es können auch inhibierende Substanzen hinzugegeben werden, was jedoch gegenüber der Hitzeinhibierung im allgemeinen keinen Vorteil bietet.

Die Inhibierung kann beispielsweise durch Veränderung des pH-Wertes erfolgen, wodurch sich dann ein zu basisches oder zu saures Medium einstellt, in dem die Enzyme nicht mehr wirksam sind bzw. abgetötet werden. Auch ist die Zugabe bestimmter Oxidationsmittel möglich. Die Hitzeinhibierung erweist sich jedoch als eine besonders elegante Verfahrenstechnik, bei der die Proteolyse durch irreversible Inaktivierung der Protease durch Erhitzen des Ansatzes auf mindestens etwa 90 °C, insbesondere etwa 95 bis 100 °C gestoppt wird.

Bei dieser Verfahrensweise läßt sich die Konzentration der Ausgangslösung auf sogar etwa 60 Gew.-% steigern, ohne daß bei der späteren Behandlung irgendwelche Komplikationen auftreten.

Anhand der vorstehend gemachten Angaben ist es dem Fachmann ohne weiteres möglich, die Erfindung erfolgreich in die Praxis umzusetzen. Dies gilt unabhängig davon, welcher Art die hergestellte wäßrige Schreibflüssigkeit ist, ob es sich beispielsweise um eine Tusche oder Tinte handelt. In jedem Fall lassen sich ihr Farbstoffe oder Farbpigmente, wie Ruß, Buntpigmente, Leucht- und Tagesleuchtpigmente oder Weißpigmente, aber auch weitere hierfür übliche Additive einverleiben, wobei eine besonders stabile Dispersion entsteht und die Dispersionsstabilisierung auf die Gelatine-Abbauprodukte zurückgeht.

Die Vorteile der Erfindung sind wie folgt zu werten: Die bei dem oben beschriebenen bekannten säurehydrolytischen Verfahren herangezogenen Rohstoffe sind, abgesehen von ihrer toxikologischen Natur, im Hinblick auf das Endprodukt wirtschaftlich nutzlose Zwischenprodukte und aus diesem Grunde zu teuer. Dieser Nachteil tritt bei der Erfindung nicht ein. Ein grober Kalkulatorischer Rohstoff-Kostenvergleich des bekannten Verfahrens und des erfindungsgemäßen Verfahrens ergibt, daß pro 100 kg Gelatine die zusätzlichen Rohstoffkosten beim erfindungsgemäßen enzymatischen Abbauverfahren nur ca. 5 bis 10 % der beim Säureverfahren anfallenden Kosten betragen. Nicht berücksichtigt ist hierbei eine eventuelle zusätzliche Kostenreduzierung, die sich durch die Arbeitszeit bzw. Energieeinsparung (Verdampfung größerer Wassermengen zwecks Konzentrierung der vorher stark verdünnten Leimlösung) ergeben kann.

Das erfindungsgemäße enzymatische Abbauverfahren ist hinsichtlich der Technologie unkompliziert und einfach durchführbar. Unter Einhaltung bestimmter Verfahrensmaßnahmen fallen keine Nebenprodukte an, die aus der Lösung entfernt werden müssen.

Im übrigen kann durch Analyse festgestellt werden, ob ein Gelatine-Abbauprodukt durch Säurehydrolyse oder erfindungsgemäß durch Proteolyse erfolgte. Hierzu kann der unterschiedliche "fingerprint" in der 2D-Elektrophorese herangezogen werden.

Die Erfindung soll nachfolgend anhand eines Beispiels noch näher erläutert werden.

## Beispiel

Zu 57,9 Gewichtsteilen Leitungswasser einer Temperatur von etwa 20 °C werden 42,0 Gewichtsteile Gelatinepulver gegeben. Anschließend wird die Mischung 30 Minuten lang unter Rühren auf 60 °C erwärmt, wobei sich eine hochviskose Lösung bildet. Zu der etwa 60 °C warmen Lösung wird unter Rühren 0,1 Gewichtsteil einer im Handel erhältlichen Protease (Enzylase K 40) gegeben. Bereits nach wenigen Minuten ist ein starker Viskositätsabfall festzustellen. Nach 30 Minuten Reaktionszeit wird die Wassertemperatur auf 95 °C erhöht. Die Temperatur wird 20 Minuten auf 95 °C gehalten. Es resultiert hieraus eine wäßrige Lösung abgebauter Gelatine mit einem FB$_4$-Viskositätswert von etwa 17 Sekunden (Auslaufzeit in Sekunden aus einem Ford-Becher mit der Düse 4).

Die nach obigem Vorgehen enzymatisch abgebaute Gelatinelösung hat hervorragende dispersionsstabilisierende Eigenschaften und kann nach bekannten Arbeitsweisen zur Herstellung von Schreib-, Zeichen- und Markierflüssigkeiten weiterverarbeitet werden.

## Ansprüche

1. Wäßrige Schreib-, Markier- und Zeichenflüssigkeit ausgenommen Flüssigkeit für druckempfindliche Durchschreibpapiere auf Mikrokapsel - Basis, bestehend aus Wasser, Farbmitteln, Dispersionsstabilisatoren und gegebenenfalls Bindemitteln, Netzmitteln, optischen Aufhellern, Lösungsmitteln und weiteren üblichen Additiven, dadurch **gekennzeichnet,** daß sie als Dispersionsstabilisatoren kolloidal gelöste Abbauprodukte von Gelatine enthält, wobei diese Abbauprodukte durch Enzymeinwirkung entstanden sind.

2. Schreib-, Markier- und Zeichenflüssigkeit nach Anspruch 1, dadurch gekennzeichnet, daß sie Pigmente enthält.

3. Schrieb-, Markier- und Zeichenflüssigkeit nach Anspruch 1 oder 2, dadurch gekennzeichnet, daß sie weitere Dispersionsstabilisatoren enthält.

4. Verfahren zur Herstellung der Schrieb-, Markier- und Zeichenflüssigkeit nach mindestens einem der vorhergehenden Ansprüche, dadurch gekennzeichnet, daß eine wäßrige Gelatinelösung mit abbauenden Enzymen versetzt wird, die Gelatineteilchen unter Erwärmen enzymatisch in Spaltprodukte zerlegt werden, der Enzymabbau inhibiert wird, bevor Spaltprodukte entstehen, die keine Dispersionsstabilisierung in wäßrigen Medien mehr zeigen, und zu der erhaltenen Lösung die für eine Schreibflüssigkeit erforderlichen färbenden Substanzen sowie gegebenenfalls weitere Additive gegeben werden.

5. Verfahren nach Anspruch 4, dadurch gekennzeichnet, daß die Inhibierung der Enzymaktivität durch Erhitzen auf mindestens 90 °C erfolgt.

Claims

1. An aqueous writing, marking and drawing liquid, excluding liquids for pressure-sensitive microcapsule-based carbon paper, comprising water, dispersion stabilizers and, if required, binders, wetting agents, optical brighteners, solvents and other conventional additives, characterized in that the dispersion stabilizers therein are the decomposition products of gelatin in colloidal solution, the decomposition products being obtained by enzyme action.

2. A writing, marking and drawing liquid according to claim 1, characterized in that it contains pigments.

3. A writing, marking and drawing liquid according to claim 1 or 2, characterised in that it contains other dispersion stabilizers.

4. A method of manufacturing the writing, marking and drawing liquid according to at least one of the preceding claims, characterized in that enzymes bringing about decomposition are added to an aqueous gelatin solution, the gelatin particles are heated and decomposed by enzymes into cleavage products, the enzyme decomposition is inhibited before production of cleavage products which do not additionally stabilize the dispersion in aqueous media, and the resulting solution is mixed with the colouring substances necessary for a writing liquid, together with other additives if required.

5. A method according to claim 4, characterised in that the enzyme activity is inhibited by heating to at least 90 °C.

Revendications

1. Liquide d'écriture à base d'eau, de marquage et de dessin, à l'exclusion de liquides pour papiers sensibles à la pression à base de microcapsules constitué d'eau, de colorants de stabilisants de dispersion et le cas échéant de liants, de mouillants, d'azurants optiques, de solvants et d'autres additifs usuels, caractérisé en ce qu'il contient comme stabilisants de dispersion des produits de dégradation dissous colloïdaux de gélatine, ces produits étant formés par action enzymatique.

2. Liquide d'écriture, de marquage et de dessin selon la revendication 1, caractérisé en ce qu'il contient des pigments.

3. Liquide d'écriture, de marquage et de dessin selon la revendication 1 ou 2, caractérisé en ce qu'il contient d'autres stabilisants de dispersion.

4. Procédé de préparation de liquide d'écriture, de marquage et de dessin selon au moins une des revendications précédentes, caractérisé à ce qu'on ajoute à une solution aqueuse de gélatine des enzymes de dégradation, qui dégradent les particules de gélatine par chauffage, enzymatiquement, en produits de dégradation, qu'on inhibe la dégradation enzymatique avant que ne se forment des produits de dégradation qui ne présentent plus de stabilisation de la dispersion dans les milieux aqueux, et qu'on ajoute à la solution obtenue les substances colorantes nécessaires au liquide d'écriture ainsi que d'autres additifs également.

5. Procédé selon la revendication 4, caractérisé en ce que l'inhibition de l'activité enzymatique a lieu par chauffage à au moins 90 °C.